# EUROPÄISCHE PATENTSCHRIFT

(11) **EP 3 891 105 B1**
(45) Veröffentlichungstag und Bekanntmachung des Hinweises auf die Patenterteilung: **04.09.2024**
(21) Anmeldenummer: 19808799.1
(22) Anmeldetag: 22.11.2019
(51) Int. Cl.: C02F 11/121, C02F 1/28

(54) **VORRICHTUNG UND VERFAHREN ZUM TRENNEN VON SUSPENSIONEN**
APPARATUS AND METHOD FOR SEPARATING SUSPENSIONS
SYSTÈME ET PROCÉDÉ DE SÉPARATION DE SUSPENSIONS

(30) Priorität: 06.12.2018 DE 102018131208
(43) Veröffentlichungstag der Anmeldung: 13.10.2021
(73) Patentinhaber: MUTEC-Markgraf GmbH, 38459 Bahrdorf (DE)
(72) Erfinder: COMES, Udo, 38118 Braunschweig (DE); MARKGRAF, Karl, 38459 Bahrdorf (DE); MIESKE, Robert, 38464 Klein Twülpstedt (DE)
(74) Vertreter: Gramm, Lins & Partner Patent- und Rechtsanwälte PartGmbB
(86) Internationale Anmeldenummer: PCT/EP2019/082294
(87) Internationale Veröffentlichungsnummer: WO 2020/114808

(56) Entgegenhaltungen:
- WO-A1-2004/005201
- JP-A- 2014 000 539
- US-B1- 6 500 344
- ANONYMOUS: "Backwashing (Water Treatment)", WIKIPEDIA, 7 December 2018 (2018-12-07), XP093008036, Retrieved from the Internet <URL:http://en.wikipedia.org/w/index.php?title=Backwashing_(water_treatment)&oldid=872408238> [retrieved on 20221214]

## Beschreibung

Die Erfindung betrifft eine Vorrichtung nach Anspruch 1 und ein Verfahren nach Anspruch 8.

Eine Vorrichtung zum Trennen von Suspensionen mit einem Sedimentationsbecken in dem ein Oberflächenfilter in die Suspension eingetaucht ist, ist beispielsweise aus der US 6 500 344 B1 bekannt. Bei der ist der Oberflächenfilter stationär angeordnet und drehend angetrieben.

Eines der häufigsten Stoffgemische ist die Suspension. Sie stellt eine heterogene Mischung aus einer Flüssigkeit und ungelösten, fein verteilten Feststoffpartikeln dar. Stoffgemische sind häufig heterogen bzw. mehrphasig und werden dann auch als Dispersion bezeichnet.

Heterogene Gemische können mit Hilfe von mechanischen Methoden getrennt werden. Die wohl einfachste Methode zur Auftrennung von Suspensionen ist das Sedimentieren. Durch das Absetzen der Feststoffe erhält man zwei Phasen, wobei man die Flüssigkeit als Überstand anschließend z.B. durch Dekantieren abtrennen kann. Die Sedimentationsgeschwindigkeit hängt von der Viskosität der Flüssigkeit, der Größe der Feststoffteilchen und der Dichte der Partikel ab, weshalb der Zeitaufwand dieses Trennverfahrens groß sein kann. Bei großen Volumina von Suspensionen werden große Becken zum Sedimentieren verwendet. Diese nennt man - je nachdem ob man die Flüssigkeit oder den Feststoff gewinnen möchte - Klärbecken oder Eindicker.

Eines der wichtigsten Trennverfahren für Suspensionen ist die Filtration, da sie häufig sehr einfach und effizient eingesetzt werden kann. Durch das Ausnutzen der physikalischen Eigenschaft, dass Feststoffe ab einer bestimmten Größe oder Form die Filterstruktur nicht passieren können, werden sie mechanisch separiert und dadurch aufkonzentriert. Grundsätzlich wird zwischen Oberflächen- und Tiefenfiltern unterschieden. Bei der Tiefenfiltration wird der abzutrennende Feststoff im Inneren eines porösen Filtermediums aufgefangen. Bei der Oberflächenfiltration wird hingegen der Siebeffekt genutzt, sodass Filtrat und Feststoff an einer Oberfläche getrennt werden.

Unter Anlegen eines Überdruckes auf der Seite des Zuflusses bzw. eines Vakuums auf der Seite des Ablaufes kann die Trenngeschwindigkeit deutlich beschleunigt werden.

Eine weitere Form der Oberflächenfiltration ist die Querstromfiltration. Das zu filternde Medium wird dabei parallel zum Filter geführt, wodurch die Ablagerung eines Filterkuchens vermieden wird. Der Feststoff wird so nicht vollständig von der Flüssigkeit befreit, sondern wird nur eingedickt.

Eine Kombination aus Zentrifugation und Filtration stellt die Filterzentrifuge dar. Ein anderes Trennverfahren ist die Flotation. Hydrophobe Partikel haften besonders gut an Gasbläschen an, wodurch sie einen Auftrieb erfahren und dann an der Flüssigkeitsoberfläche als Schaum (Flotat) schwimmen, mit dem der Feststoff abgenommen werden kann.

In der Verfahrenstechnik wird bei großen Flüssigkeitsmengen oft eine einfache Sedimentation vor einer Filtration durchgeführt. Entweder um die Flüssigkeit vorzureinigen oder um das zu filtrierende Gemisch zu konzentrieren.

Als Suspensionen kommen Klärschlamm (Primärschlamm, Sekundärschlamm, Mischschlamm, Faulschlamm), Rohgülle bzw. Gülle und/oder Gärreste aus Biogasanlagen, suspendierte Abfälle und Nebenprodukte aus der Lebensmittelindustrie oder wasserreiche Fest-Flüssig-Gemische mit organischen Anteilen in Frage, die unter anderem durch Eutrophierung in Seen, Teichen, Flüssen und an Meeresküsten entstehen.

Bei der Reinigung von Abwasser durch Kläranlagen entsteht als Reststoff Klärschlamm, der in Klärbecken abgezogen wird und einer weiteren Behandlung bedarf. Der Klärschlamm ist eine sehr wasserreiche und feststoffarme Suspension (z. B. Überschussschlamm: 6 - 8 kg Trockenrückstand je m³).

Für alle weiteren Prozessschritte ist die Volumenreduzierung eine notwendige Voraussetzung für eine wirtschaftliche und klimaschonende Schlammbehandlung. Mehr als die Hälfte der kommunalen Kläranlagen in Deutschland führte 2003 keine oder nur eine statische Eindickung durch. Insgesamt gibt es in Deutschland rund 10.000 kommunale Kläranlagen. In Europa sind es über 70.000 kommunale Kläranlagen.

Rund 150 000 landwirtschaftliche Betriebe haben im Jahr 2015 auf ihre Flächen_flüssigen Wirtschaftsdünger, also Gülle, Jauche oder flüssigen Gärrest aus der Biogasanlage ausgebracht. Dies waren circa 55 % aller Betriebe in Deutschland. Insgesamt fielen 204 Millionen Kubikmeter an. Ein Teil der Betriebe produziert einen Rohgülleüberschuss, der nicht auf den eigenen Feldern zur Düngung genutzt werden kann, sondern regelmäßig entsorgt werden muss. Eine Volumenreduzierung senkt hier direkt die Entsorgungskosten, die häufig von den anteiligen Transportkosten dominiert werden.

Organische, suspendierte Nebenprodukte der Lebensmittelindustrie, wie von Großbäckereien, Getränkeherstellern, fleisch- oder milchverarbeitenden Unternehmen, werden häufig an anderer Stelle weiterverwendet oder müssen entsorgt werden. Eine Aufkonzentrierung der Feststoffe durch eine Eindickung kann das Transportvolumen deutlich reduzieren und somit Kostenvorteile schaffen.

Durch Eutrophierung in Seen, Teichen, Flüssen und an Meeresküsten kann ein vermehrtes Wachstum von Algen oder Kleinstpflanzen entstehen. Durch eine vermehrte Abtrennung der organischen Feststoffe aus dem Gewässer können in der Organik gebundene Nährstoffe dem Gewässer entzogen werden. Eutrophierungseffekte, wie vermehrte Sauerstoffzehrung werden verringert. Auch die Eindickung von Algen aus Zuchtanlagen zur Vorbereitung auf die weitere Behandlung stellt einen Anwendungsfall dar.

Klärschlamm, der kommunal oder industriell in der Abwasserreinigung entsteht kann statisch eingedickt werden. Dabei handelt es sich um ein häufig eingesetztes und einfaches Verfahren zur Eindickung. Bei Standeindickern bzw. Durchlaufeindickern erfolgt eine Feststoffanreicherung im unteren Teil des Eindickers durch Sedimentation. Der Feststoffgehalt im unteren Teil des Eindickers nimmt grundsätzlich zu. Im Standeindicker erfolgt die Schlammzuführung diskontinuierlich. Die Sedimentation erfolgt in der Regel innerhalb eines Tages. Nach Abschluss der Sedimentation hat sich eine Trennung von überstehendem Schlammwasser (Trübwasser) ergeben, was dann abgezogen werden kann. Anschließend wird der eingedickte Klärschlamm abgezogen. In manchen Anwendungsfällen wird auch in umgekehrter Reihenfolge gearbeitet.

Manuelle Einrichtungen zum Abzug von Schlammwasser sind Teleskoprohre, schwimmende Entnahmeeinrichtungen oder Stufenablässe. Hierzu ist die direkte Beobachtung durch das Betriebspersonal notwendig, um den Übergang von der Trübwasserphase zur Schlammphase optisch zu erkennen.

Im Durchlaufeindicker erfolgen der Schlammzulauf, Schlammwasserablauf und die Entnahme des eingedickten Klärschlammes (quasi-) kontinuierlich. Der Schlamm wird in der Regel über ein zentrales Mittelbauwerk in der oberen Schlammwasserzone zugeführt. Die Feststoffteilchen sedimentieren im Becken, wobei das Schlammwasser nach oben steigt und hinter vorgelagerten Tauchwänden am Umfang des Eindickers über Abnahmerinnen abläuft. Die Entnahme des eingedickten Klärschlammes erfolgt an der Stelle mit der höchsten Eindickung - der Trichterspitze.

Maschinelle Eindickaggregate nutzen meist künstliche Schwerefelder, um einen zuvor chemisch konditionierten Klärschlamm vom Schlammwasser zu befreien. Die Abtrennung erfolgt über Siebtücher und Siebbleche. Die meisten Aggregate erfordern den Einsatz polymerer Flockungsmittel (pFM), um im Vorfeld das Wasserbindungsvermögen des Schlammsuspension durch Konditionierung herabzusetzen.

Ein anderes Verfahren zur mechanischen Abtrennung von Schweb- und Schwimmstoffen ist die Flotation. Durch Einpressen von Gasblasen in die Suspension haften Partikel an auftreibende Gasblasen an und erzielen die Fest-Flüssig-Trennung durch Aufschwimmen und das anschließend abzuziehende Flotat. Üblicherweise wird ein Bodenräumer zusätzlich vorgesehen, um eine Verschlammung des Beckens zu vermeiden. Zudem ist u. U. die Zugabe von Chemikalien (Schäumer) zur Erhöhung des Abscheidegrads erforderlich. Bei diesem Verfahren findet keine Abscheidung über einen Filter statt.

Eine Eindickung von Suspensionen kann auch in Containern mit einem Trennsieb oder in (Filter-)Säcken aus Siebtüchern stattfinden. Hier wird das natürliche Schwerefeld ausgenutzt.

Bei der statischen Eindickung wird zwischen Stand- und Durchlaufeindicker unterschieden. Standeindicker werden meist doppelt oder dreifach ausgeführt und nach einer nacheinander folgenden Befüllung für ca. 24 h stehen gelassen, um den Dekantierungsprozess nach der Sedimentierung der Feststoffe durchzuführen. Der Schlamm gelangt in sehr steil ausgelegte Trichterspitzen (Mindestgefälle 1,5 : 1). Das Eindickvolumen wird für Aufenthaltszeiten (HRT) von üblicherweise 1 bis 2 Tagen bemessen. Auch Durchlaufeindicker, ähnlich aufgebaute Absetzbecken wie Vor- und Nachklärbecken, werden für eine Aufenthaltszeit von 1 bis 2 Tagen ausgelegt. Durchlaufeindicker werden (quasi-)kontinuierlich durchströmt und der Absetzprozess der Feststoffe durch ein Räum- und Krählwerk positiv beeinflusst. Der eingedickte Schlamm wird, analog zu den Standeindickern, aus einer Trichterspitze in der Beckenmitte abgezogen.

Auf kleineren Kläranlagen finden sich häufig keine Stand- oder Durchlaufeindicker, da hauptsächlich die Investitionskosten zu hoch sind, aber auch der personelle Aufwand für den Betrieb oft nicht erbracht werden kann. Stattdessen wird versucht in sogenannten Schlammstapelbehälter oder Schlammspeichern den Schlamm in großen Becken zwischen zu speichern und gleichzeitig den Schlamm durch Abzug von Trübwasser (1-mal täglich bis wöchentlich), nach einer Sedimentierung aufkonzentriert zu erhalten.

Der Überstand, also das Trübwasser, kann in Speicherbecken und Standeindickern über Stufenablässe, schwenkbare Entnahmerohre (beides manuell betrieben) und oder auch durch Trübungssonden gesteuerte elektromotorisch absenkbare Tauchpumpen (automatisiert) entnommen werden. Häufig werden auch Tauchpumpen auf einer "festen" Tauchtiefe mit Trübungssensoren betrieben, deren Tiefe nur manuell und diskontinuierlich veränderbar ist (teilautomatisiert). Die Zugabe von Konditionierungsmitteln, wie Kalk oder polymere Flockungsmittel (pFM), in Schlammstapelbehälter oder Eindicker hat oft nur einen bedingten Erfolg und führt nur zu einer kurzfristigen vermehrten Wasserabgabe der Schlammfeststoffe (kurze Scherstabilität der pFM). Zudem sind beim Einsatz von Flockungsmitteln die Auswirkungen auf die Betriebskosten zu berücksichtigen, die durch zusätzliche Betriebsmittel und den personellen Aufwand zur Annahme, Lagerung, Aufbereitung und Dosierung entstehen. Die Speicherung von Klärschlamm erfolgt aus nachfolgenden Gründen:
a) Der Klärschlamm wird je nach Größe ein bis mehrmals wöchentlich zur nächstgrößeren Kläranlage abgefahren und dort in einer Schlammfaulung endbehandelt, entwässert und entsorgt. Hier sind auch Speichervolumina erforderlich.
b) Der Klärschlamm wird rein landwirtschaftlich verwertet. Hier müssen für das Winterhalbjahr (Ausbringungsverbot) hohe Speichervolumen vorgehalten werden.
c) Der Klärschlamm wird durch eine mobile Lohnentwässerung in Kampagnen entwässert und der entwässerte Klärschlamm abgefahren. Für die mobile Entwässerung werden Mindestmengen benötigt, hierfür werden je nach Kläranlagengröße ebenfalls hohe Speichervolumina erforderlich. Zudem muss das abgetrennte Zentratwasser aufgefangen und dosiert in den Kläranlagezulauf zurückgeführt werden, da aufgrund der hochkonzentrierten Nährstoffe im Zentratwasser u. a. die Ablaufgrenzwerte der Kläranlage überschritten werden können. Auch hierfür werden Speichervolumina benötigt.

Maschinelle Eindickaggregate erfordern häufig eine Mindestmenge an einzudickenden Schlamm, sodass im Vorfeld eine Speicherung von Schlamm in einer Vorlage erforderlich ist. Darüber hinaus können sich schnell hohe Investitions- und Betriebskosten ergeben, die einwohnerspezifisch gesehen dann unwirtschaftliche Ausmaße annehmen. Die Maschinentechnik muss häufig in einem Gebäude oder Container installiert werden. Auch die Notwendigkeit, dass der Schlamm für die Eindickung chemisch vorkonditioniert muss, erhöht die Anforderung an die Lagerung und Aufbereitung (Aufbereitungsstation) der polymeren Flockungsmittel.

Die Qualität des Schlammwasserabzuges ist entscheidend. Statisches Eindicken ist mit dem Nachteil verbunden, dass vorzugsweise nur deutlich abgegrenzte Schlammwasserschichten abgezogen werden können, weil sonst das der Abwasserreinigung wieder zugeführte Schlammwasser zu einem erhöhten Reinigungsaufwand in der biologischen Stufe der Abwasserreinigung führt. Das freie Schlammwasser in den Konsolidierungsschichten kann nicht getrennt werden, ohne die darin enthaltenen Feststoffe mit abzuziehen. Beim Ablassen des eingedickten Schlamms besteht vor der Abtrennung des Schlammwassers bei zu hohen Entleerungsgeschwindigkeiten die Gefahr der Ausbildung von Wasserlinsen oder Wassertrichtern, die eine Vermischung des abgezogenen Schlamms mit Trübwasser bedingen. Dabei besteht grundsätzlich auch die Gefahr, dass Schlamm aufgewirbelt und mit abgezogen wird. Von hoher Bedeutung ist die Abtrennung von Schlammwasser mit möglichst wenig Feststoffanteilen, damit die biologische Stufe der Abwasserreinigung nicht zu sehr belastet wird.

Die WO 2004/005201 A1 offenbart ein Verfahren und eine Vorrichtung zur Schlammführung aus einer Schmutzwasserbehandlungsanlage in einen Entwässerungs- und Kompostierbehälter, wobei Schlamm und/oder Dickstoffe unterschiedlicher Quelle dem Bodenbereich eines Entwässerungs- und Kompostierbehälters zugeführt werden, sodass das Restwasser nach unten durchsickert, während der obere Bereich der Feststoffe zunehmend durchtrocknet und kompostiert wird.

Aus der JP 2014 000539 A ist ein Filtersystem bekannt, in dem runde Oberflächenfilter eingesetzt sind. Als Filterelemente werden Netze oder Gewebe verwendet, an deren Außenseite sich Schlamm festsetzt, der mittels Überducks von innen abgestoßen werden kann.

Von dieser Problemstellung ausgehend sollen eine eingangs beschriebene Vorrichtung und ein Verfahren zum Trennen von Suspensionen so verbessert werden, dass die Trennung von Klärschlamm in die Phasen Schlammwasser (Flüssigkeit) und Schlamm (Feststoffe) effektiver erfolgt.

Zur Problemlösung zeichnet sich eine gattungsgemäße Vorrichtung dadurch aus, dass zwischen dem äußeren Lochblech und dem inneren Lochblech mindestens ein sich in einer Axialrichtung erstreckendes Rohr eingesetzt ist, dessen Wandung Löcher aufweist, und dass die innere Kammer mit einem Fluid befüllbar ist und das in der Kammer befindliche Fluid in Folge eines Druckunterschiedes in die äußere Kammer gedrückt wird und der Oberflächenfilter dadurch spülbar und somit reinigbar ist.

Dadurch, dass das Sedimentationsbecken in zwei Kammern unterteilt wird, wird an der Oberfläche des äußeren Lochblechs der Klärschlamm in zwei Phasen getrennt. Partikuläre Feststoffe werden an dem äußeren Lochblech getrennt und in der ersten Kammer gesammelt. Durch das Filtermaterial fließt Schlammwasser hindurch. Das aus dem inneren Lochblech austretende Filtrat wird in der zweiten Kammer gesammelt und von dort abgepumpt und/oder durch eine Ablassvorrichtung ausgetragen.

Um in den Oberflächenfilter eine Spüleinrichtung und/oder eine Belüftungseinrichtung zu integrieren, ist zwischen dem äußeren und dem inneren Lochblech das mindestens eine sich in Axialrichtung des Sedimentationsbeckens erstreckende Rohr eingesetzt, dessen Wandung Löcher aufweist, die eine Durchströmung des Filtersaums mit Fluid (Gas oder Flüssigkeit) ermöglicht. Dadurch werden außerdem zusätzliche Entwässerungskanäle aktiv geschaffen, die den Transport von Schlammwasser durch den Oberflächenfilter wirksam unterstützen und damit dessen Wirksamkeit deutlich verbessern. Die Spülung des Oberflächenfilters oder der Betrieb zur Bildung von Entwässerungspassagen und -kanälen kann in jeder Prozessphase mit Fluiden (Gas oder Flüssigkeit) erfolgen. Die Löcher in der Wandung des Rohres können als rundes Loch, Düsen, Schlitze oder sonstige geeignete Öffnungen mit und ohne selbstverschließende Funktion ausgestaltet werden. Das Rohr kann vorzugsweise axial oder alternativ horizontal eingebaut werden.

Die Lochbleche können aus Metall, aus Kunststoff oder einem anderen geeigneten Material bestehen. Das Filtermaterial ist vorzugsweise ein Natursubstrat, insbesondere Holzmaterial, vorzugsweise werden Holzschnitzel verwendet oder ein sonstiges geeignetes Filtermaterial.

Durch die Verwendung eines biologischen Mikrofilters können alle Zonen einer Suspension, von der klaren Wasserzone, über die Konsolidierungszonen bis hin zu den Eindickzonen mit dem Oberflächenfilter eingedickt werden. An der Oberfläche des Oberflächenfilters werden die Feststoffe effektiv durch die Struktur von der Flüssigkeit getrennt, indem die Flüssigkeit den Oberflächenfilter durchströmt und die Feststoffe von dem Filter zurückgehalten werden. Daraus resultiert ein höherer Feststoffgehalt der Suspension vor dem Filter. Der Eindickungsgrad wird gegenüber den bekannten Vorrichtungen um 50 bis 100% verbessert.

Der Oberflächenfilter kann zylindrisch, oder Polyeder ausgebildet und die Lochbleche konzentrisch zueinander angeordnet sein. Die zweite Kammer des Sedimentationsbeckens bildet sich dann im Inneren des Oberflächenfilters aus.

Wenn der Oberflächenfilter plattenförmig ausgebildet ist und die Lochbleche parallel zueinander angeordnet sind, wird das Sedimentationsbecken in zwei nebeneinanderliegende Kammern unterteilt. Hierbei kann die plattenförmige Ausgestaltung gerade oder in einem leichten Rundbogen erfolgen.

Der Oberflächenfilter kann mit seinem oberen Rand über die Oberfläche der wässrigen Suspension (Fluidoberfläche) hinausragen. Er kann auch mit einem Schwimmkörper versehen sein, um ihn über der Fluidoberfläche zu halten. Insbesondere, wenn der Oberflächenfilter in tiefen Sedimentationsbecken verwendet werden soll, kann er an seinen Enden mit Deckeln verschlossen sein und dann vollständig mit der in ihm aufgenommenen Pumpe in die Suspension eintauchen. Durch den oberen Deckel hindurch wird dann die zweite Ableitung geführt.

Das Verfahren zum Trennen von Suspensionen zur Eindickung von Schlamm, insbesondere von Klärschlamm, mittels einer Vorrichtung mit einem Sedimentationsbecken, in das über eine Zuleitung die mit Feststoffpartikeln versehene wässrige Suspension zuführbar und aus dem über eine erste Ableitung eingedickter Schlamm abführbar ist, wobei in die Suspension ein Oberflächenfilter eingetaucht ist, der aus mindestens einem äußeren Lochblech, einem hierzu beabstandet angeordneten inneren Lochblech und einem zwischen den beiden Lochblechen eingesetzten Filtermaterial besteht, wobei der Oberflächenfilter das Sedimentationsbecken in eine äußere Kammer und eine innere Kammer (10.2) unterteilt, und dem inneren Lochblech eine Pumpe zugewandt ist, die mit einer zweiten Ableitung zusammenwirkt, und/oder eine Ablassvorrichtung vorgesehen ist, über die ein Filtrat aus dem Sedimentationsbecken abführbar ist, erfolgt mit folgenden Schritten:
a) Einfahren des Oberflächenfilters in das Sedimentationsbecken,
b) Einfüllen der wässrigen Suspension über die Zuleitung in das Sedimentationsbecken,
c) Abschneiden der Feststoffe an der Oberfläche des Oberflächenfilters bzw. des äußeren Lochblechs,
d) Sammeln des aus dem inneren Lochblech austretenden Filtrats in der inneren Kammer,
e) Herauspumpen des in der inneren Kammer gesammelten Filtrats mittels der Pumpe über die zweite Ableitung und/oder Abführen des Filtrats über eine Ablassvorrichtung zeichnet sich dadurch aus, dass
f) über ein im Filtermaterial angeordnetes Rohr (20) und in der Wandung des Rohres befindliche Löcher (21) Fluid in den Oberflächenfilter (11, 17) eingetragen wird, und
g) der Oberflächenfilter zur Reinigung mit einem Fluid, insbesondere mit Wasser gespült wird, wobei das Fluid dann von dem inneren Lochblech in Richtung des äußeren Lochblechs fließt und aus diesem wieder austritt.

Die in der äußeren Kammer gesammelte eingedickte Suspension kann gleichzeitig oder später über die erste Ableitung herausgepumpt werden.

Der Oberflächenfilter wird vorzugsweise belüftet, damit sich vermehrt aerobe Bakterien auf dem Filtermaterial ansiedeln und mit ausreichend Sauerstoff versorgt werden, wird der Oberflächenfilter vorzugsweise belüftet.

Der Oberflächenfilter wird zur Reinigung vorzugsweise mit einem Fluid, insbesondere mit Wasser bespült, wobei das Fluid dann von dem inneren Lochblech in Richtung des äußeren Lochblechs fließt und aus diesem wieder austritt. Zum Spülen kann das Fluid unter Überdruck stehen.

Vorzugsweise wird der Oberflächenfilter zur Reinigung aus der Suspension oder aus dem Sedimentationsbecken herausgehoben und die zweite Kammer mit Fluid gefüllt, so dass durch den natürlichen Druckunterschied das Fluid dann von dem inneren Lochblech in Richtung des äußeren Lochblechs fließt und aus diesem wieder austritt.

Vorzugsweise wird der Oberflächenfilter belüftet, damit die Strömung des Fluids durch den Filter durch aktiv geschaffene, zusätzliche Drainagekanäle unterstützt wird. Diese Unterstützung gilt gleichermaßen für die Reinigung mit einer Strömung vom inneren zum äußeren Lochblech und für die Filtration mit einer Strömung vom äußeren zum inneren Lochblech.

Die Belüftung erfolgt also über ein im Filtermaterial angeordnetes Rohr und in der Wandung des Rohres befindliche Löcher über die Fluid - gasförmig oder flüssig - in den Oberflächenfilter eingetragen wird, sodass damit zusätzliche Entwässerungskanäle und -passagen aktiv geschaffen werden, die den Transport von Schlammwasser (Strömungsrichtung von außen nach innen) und von Reinigungswasser (Strömungsrichtung von innen nach außen) durch die Oberflächenfilter wirksam unterstützen.

Mit Hilfe einer Zeichnung sollen Ausführungsbeispiele der Erfindung nachfolgend näher beschrieben werden. Es zeigen:
- Figur 1 -: die schematische Darstellung eines ersten Ausführungsbeispiels ohne das im Filtermaterial eingesetzte Rohr im Längsschnitt;
- Figur 2 -: die schematische Darstellung eines zweiten Ausführungsbeispiels ohne das im Filtermaterial eingesetzte Rohr im Längsschnitt;
- Figur 3 -: die schematische Darstellung eines dritten Ausführungsbeispiels ohne das im Filtermaterial eingesetzte Rohr im Längsschnitt;
- Figur 4 -: die schematische Darstellung einer Vorrichtung in der Ausgangsposition ohne Suspension;
- Figur 5 -: die Darstellung nach Figur 4 mit eingefüllter Suspension;
- Figur 6 -: die Ausbildung des Schlammspiegels im Sedimentationsbecken nach dem Absetzprozess;
- Figur 7 -: eine erfindungsgemäße Vorrichtung in Funktion;
- Figur 8 -: die schematische Darstellung einer erfindungsgemäßen Vorrichtung im Längsschnitt nach weitestgehender Abtrennung des freien Schlammwassers;
- Figur 9 -: die schematische Darstellung des Oberflächenfilters;
- Figur 10 -: die schematische Darstellung eines vierten Ausführungsbeispiels im Längsschnitt;
- Figur 11 -: eine in den Filter integrierte Spüleinrichtung;
- Figur 12 -: eine in den Filter integrierte Spüleinrichtung;

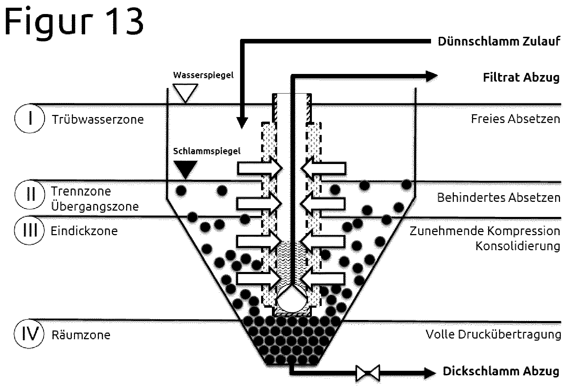

- Figur 13 -: die Darstellung der einzelnen Zonen in einer erfindungsgemäßen Vorrichtung.

Eine Vorrichtung zum Trennen von Suspensionen zur Eindickung von Schlamm, bzw. Aufkonzentrierung von Feststoffen, besteht aus dem Sedimentationsbecken 10 und dem in das Sedimentationsbecken 10 eingesetzten Oberflächenfilter 11, 17. Über eine Zuleitung 13 wird die mit Feststoffpartikeln versehene wässrige Suspension in das Sedimentationsbecken 10 eingefügt. Über eine Pumpe 9 wird Filtrat 3 aus dem Sedimentationsbecken 10 über eine Ableitung 14 abgeführt. Der sich im Sedimentationsbecken 10 absetzende Schlamm 8 wird über die Ableitung 7 abgeführt.

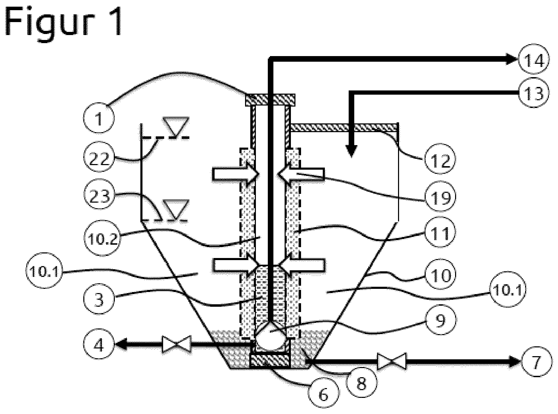

In einer ersten Ausführungsform (Figur 1) besteht der Oberflächenfilter 11 aus zwei zylindrischen Lochblechen 11.1, 11.2, die koaxial zueinander angeordnet sind. Zwischen dem äußeren Lochblech 11.1 und dem inneren Lochblech 11.2 ist Filtermaterial 11.3 eingesetzt. Dieses Filtermaterial 11.3 ist vorzugsweise biologisches Material und besteht beispielsweise aus Holzschnitzeln. Es kann aber auch jedes andere geeignete Filtermaterial (z. B. Stahl- oder Tonelemente, -kugeln) zum Einsatz kommen. An seinen gegenüberliegenden Enden 16 ist der Oberflächenzylinder 11 mit Deckeln 1, 6 verschlossen. Im Inneren des Oberflächenfilters 11 ist eine Pumpe 9 angeordnet, die vom inneren Lochblech 11.2 umgeben ist. Die Pumpe 9 arbeitet in die Ableitung 14, die durch den oberen Deckel 6 hindurchgeführt ist. Der rohrförmige Oberflächenfilter 11 trennt das Sedimentationsbecken 10 in eine erste, äußere Kammer 10.1 und eine zweite, innere Kammer 10.2 ab. Die über die Leitung 13 zugeführte Suspension wird über den Oberflächenfilter 11 in Feststoff und Schlammwasser segmentiert. Die Feststoffpartikel lagern sich im Bodenbereich der ersten Kammer 10.1 ab. Durch den Druckunterschied in der ersten Kammer 10.1 und der zweiten Kammer 10.2 wird das Schlammwasser durch den Oberflächenfilter 11 hindurchgepresst, wie in Figur 1 durch die Pfeile 19 angedeutet wird. Dort sammelt sich dann in der zweiten Kammer 10.2 das Filtrat 3 und wird von der Pumpe 9 über die Ableitung 14 abgefördert. Über die Leitung 7 kann der sich in der ersten Kammer 10.1 abgesetzte Schlamm 8 abgeführt werden. Über den Träger 12 ist der Oberflächenfilter 11 fest mit dem Sedimentationsbecken 10 verbunden.

Damit sich die abgeschiedenen Feststoffpartikel nicht an dem Inneren des Sedimentationsbeckens 10 absetzen, ist dieses trichterförmig ausgestaltet, wobei der Öffnungswinkel α des Trichters etwa 60° beträgt. Die Höhe der Schlammlinie ist mit 23 und die Höhe der Wasserlinie (Oberfläche der Suspension) mit 22 bezeichnet.

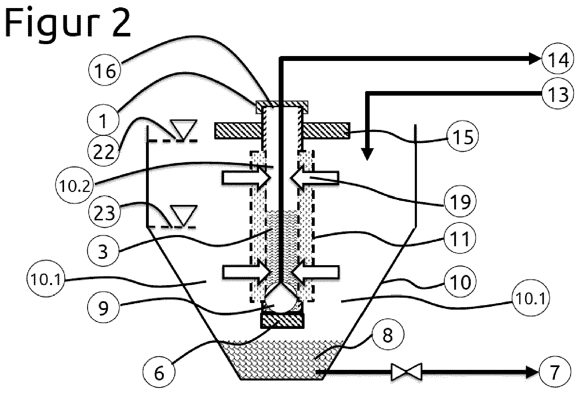

Bei dem in Figur 2 dargestellten Ausführungsbeispiel ist der Oberflächenfilter 11 mit einem Schwimmkörper 15 verbunden, der ihn mit seinem oberen Ende 16 über der Wasserlinie 22 hält. Der Oberflächenfilter 11 kann gegenüber dem in Figur 1 dargestellten Ausführungsbeispiel kleiner gebaut werden und weist, damit zwischen innerer Kammer 10.2 und äußerer Kammer 10.1 geringere Druckunterschiede auf. Ansonsten entspricht der Aufbau dem in Figur 1 gezeigten Ausführungsbeispiel.

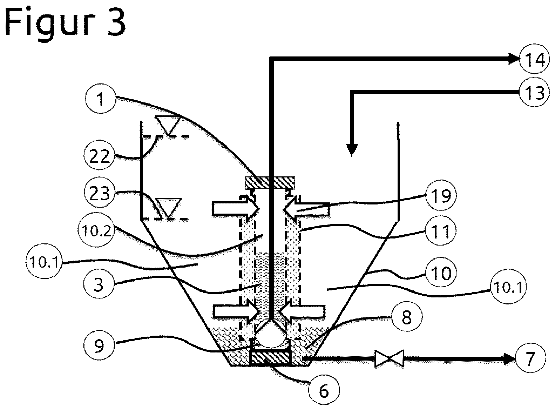

Bei dem in Figur 3 ausgeführten Ausführungsbeispiel handelt es sich um einen Tauchfilter, der an seinen beiden Enden hermetisch mit Deckeln 1, 6 verschlossen ist und weit in die Suspension eintauchen kann. Diese Ausführungsform ist besonders gut geeignet, wenn in tiefen Bereichen von Sedimentationsbecken 10 Schlamm eingedickt werden soll. Bei vollem hydrostatischem Druck kann das Schlammwasser direkt den Oberflächenfilter 11 durchströmen, was zu einer schnelleren Konsolidierung und damit zu einer höheren Feststoffkonzentration in der Eindick- und Räumzone führt. Ansonsten entspricht der Aufbau dem in Figur 1 gezeigten Ausführungsbeispiel.

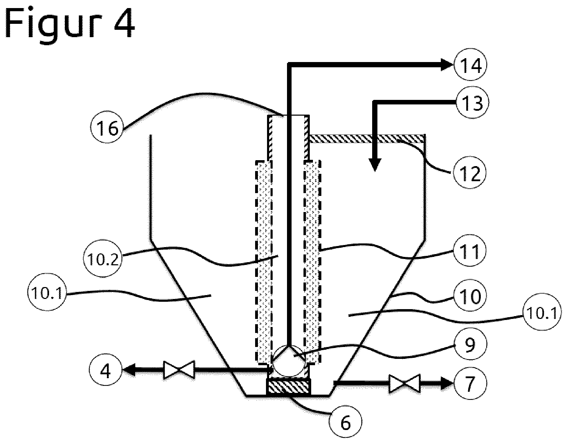

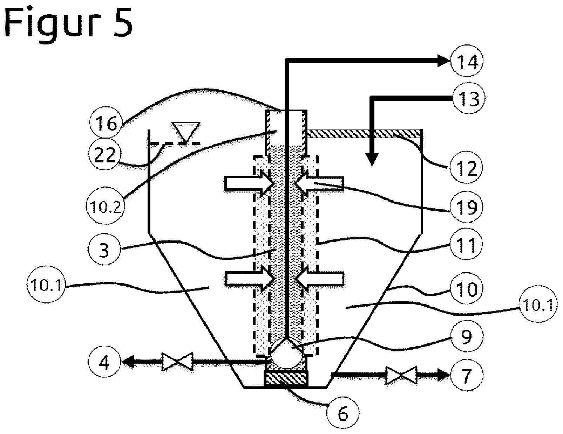

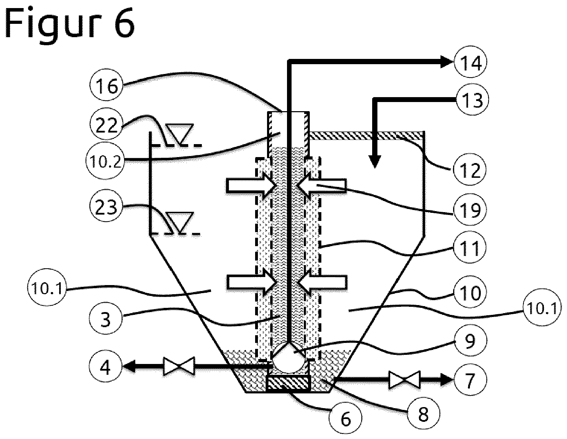

Die Figuren 4 bis 9 gliedern den Gesamtprozess in wesentliche Teilprozesse. Figur 4 zeigt den Ausgangszustand mit leeren Behältern. Figur 5 zeigt das Ergebnis des Teilprozesses Befüllung. Über die Zuleitung 13 wurde das Sedimentationsbecken 10 gefüllt. Aufgrund des hydrostatischen Druckausgleichs haben die äußere Kammer 10.1 und die innere Kammer 10.2 des Sedimentationsbeckens 10 denselben Füllstand. Figur 6 zeigt die Ausbildung eines Schlammspiegels mit einer Schlammoberfläche 23 und der darüber angeordneten Fluidoberfläche 22.

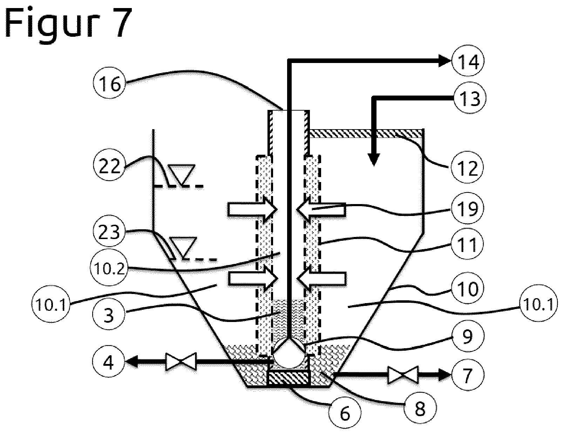

Aus Figur 7 geht der sequenzielle Abzug von Filtrat 3 über die Pumpe 9 hervor. Alternativ kann das Filtrat 3 auch über die Ablassvorrichtung 4 im Oberflächenfilter 11 abgelassen werden. Durch den hydrostatischen Druckunterschied strömt Schlammwasser weiter in die innere Kammer 10.2, wie mit den Pfeilen 19 angedeutet ist. Dadurch erfolgt eine sukzessive Absenkung des Wasserspiegels 22. Durch die weitere Abtrennung des Schlammwassers in der Eindickzone findet eine weitere Erhöhung des Feststoffgehaltes des verbleiben Klärschlamms 8 in der äußeren Kammer 10.1 des Sedimentationsbeckens 10 statt.

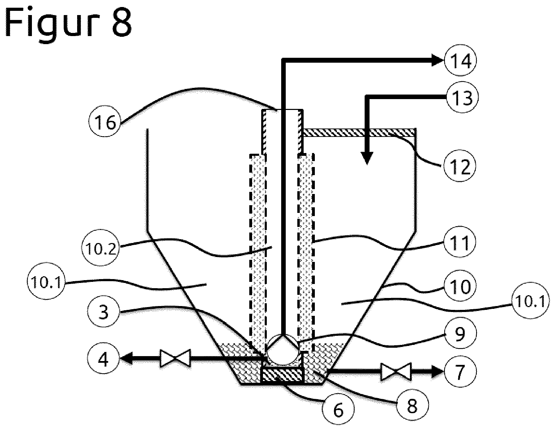

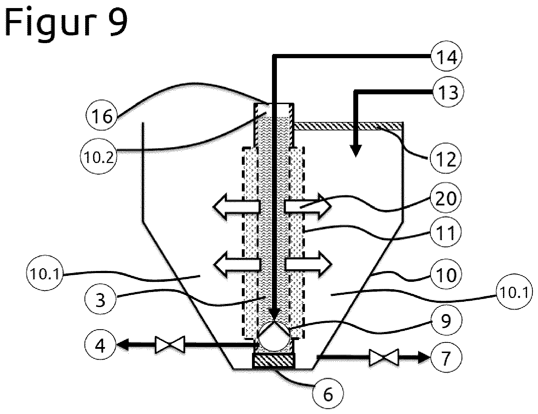

Die weitestgehende Abtrennung des freien Schlammwassers durch den Oberflächenfilter 11 ist in Figur 8 dargestellt. In der Eindick- und Räumzone befindet sich nun ein eingedickter Klärschlamm 8, der über die Ablaufleitung 7 abgezogen wird. Wie Figur 8 erkennen lässt, kann das obere Ende 16 des Oberflächenfilters 11 auch offen ausgebildet sein. Figur 9 zeigt schließlich den entleerten Sedimentationsbehälter 10 und eine mit Frisch- oder Betriebswasser gefüllte innere Kammer 10.2. Wie durch die Pfeile 19 angedeutet wird das in der Kammer 10.2 befindliche Wasser in Folge des Druckunterschiedes in die äußere Kammer 10.1 des Sedimentationsbehälters 10 gedrückt und der Oberflächenfilter 11 dadurch gespült und somit gereinigt.

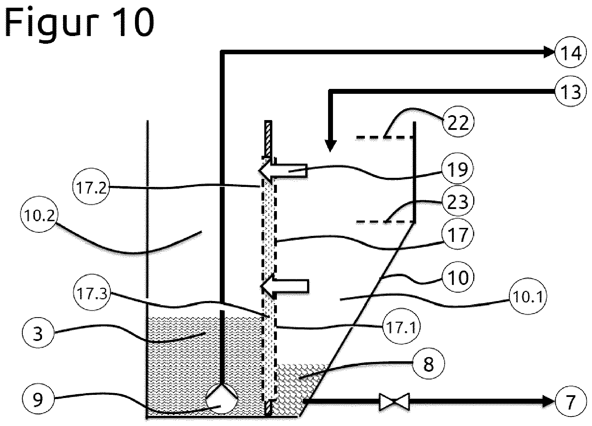

Ein viertes Ausführungsbeispiel der erfindungsgemäßen Vorrichtung zeigt Figur 10. Der Oberflächenfilter 17 wird hier durch eine Wand gebildet, die fest in den Sedimentationsbehälter 10 integriert ist. Diese Wand besteht ebenfalls aus einem äußeren Lochblech 17.1 und einem inneren Lochblech 17.2, die parallel zueinander angeordnet sind. Der Zwischenraum zwischen den Lochblechen 17.1, 17.2 ist mit Filtermaterial 17.3 ausgefüllt, das ebenfalls vorzugsweise biologisches Material wie beispielsweise Holzschnitzel ist. Durch die Wand wird der Sedimentationsbehälter 10 auch in zwei Kammern 10.1, 10.2 unterteilt. Die erste Kammer 10.1 wird von dem äußeren Lochblech 17.1 und die zweite Kammer 17.2 von dem inneren Lochblech 17.2 begrenzt. Das Filtrat 3 wird über die in der zweiten Kammer 10.2 angeordnete Pumpe 9 über die Ableitung 14 aus der zweiten Kammer 10.2 herausgepumpt.

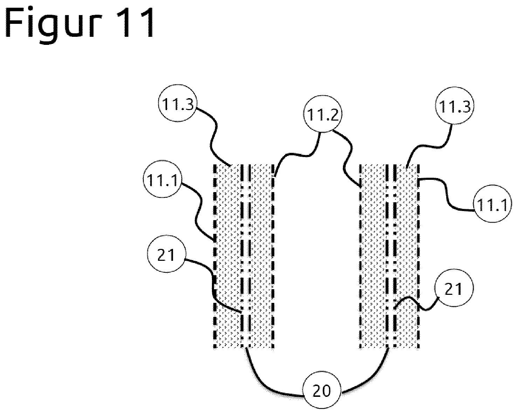

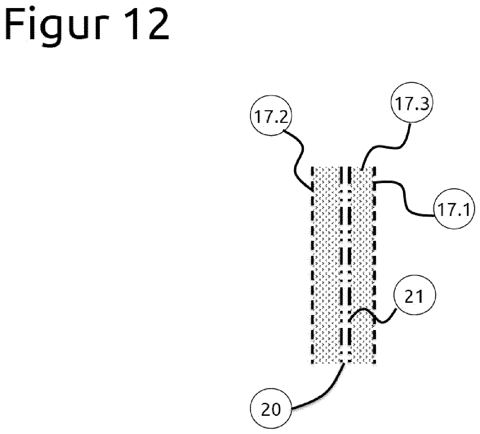

Figuren 11 und 12 zeigen die Oberflächenfilter 11, 17 mit einer integrierten Spüleinrichtung bzw. Belüftungseinrichtung, die durch ein Rohr 20 gebildet wird, das vorzugsweise in Axialrichtung A_{R} zwischen die beiden Lochplatten 11.1, 11.2; 17.1, 17.2 eingesetzt ist. Dieses Rohr 20 weist in seiner Wandung Löcher 21 auf, durch die Spülflüssigkeit bzw. Gas gegebenenfalls mit Überdruck gedrückt werden kann. Die Spülung kann auch mit Gas, vorzugsweise mit Luft erfolgen. Über diese Löcher 21 werden zusätzliche Entwässerungskanäle aktiv geschaffen, die den Transport von Schlammwasser durch die Oberflächenfilter 11, 17 wirksam unterstützen.

### Bezugszeichenliste

- 1: Deckel
- 3: Filtrat
- 4: Ablassvorrichtung
- 6: Deckel
- 7: erste Ableitung
- 8: Schlamm / Klärschlamm
- 9: Pumpe
- 10: Sedimentationsbecken
- 10.1: erste Kammer
- 10.2: zweite Kammer
- 11: Oberflächenfilter
- 11.1: äußeres Lochblech
- 11.2: inneres Lochblech
- 11.3: Filtermaterial
- 12: Träger
- 13: Zuleitung
- 14: zweite Ableitung
- 15: Schwimmkörper
- 16: Ende / Rand
- 17: Oberflächenfilter
- 17.1: äußeres Lochblech
- 17.2: inneres Lochblech
- 17.3: Filtermaterial
- 19: Pfeil
- 20: Rohr
- 21: Loch
- 22: Wasserlinie / Fluidoberfläche / Wasserspiegel
- 23: Schlammlinie / Oberflächenlinie / Schlammoberfläche / Schlammspiegel
- α: Öffnungswinkel
- A_{R}: Axialrichtung

## Patentansprüche

1. Vorrichtung zum Trennen von Suspensionen zur Eindickung von Schlamm, insbesondere von Klärschlamm, mit einem Sedimentationsbecken (10), in das über eine Zuleitung (13) die mit Feststoffpartikeln versehene wässrige Suspension zuführbar und aus dem über eine erste Ableitung (7) eingedickter Schlamm (8) abführbar ist, und einem in die Suspension eintauchbaren Oberflächenfilter (11, 17), der aus mindestens einem äußeren Lochblech (11.1, 17.1), einem hierzu beabstandet angeordneten inneren Lochblech (11.2, 17.2) und einem zwischen den beiden Lochblechen (11.1, 11.2; 17.1, 17.2) eingesetzten Filtermaterial (11.3, 17.3) besteht, wobei der Oberflächenfilter (11, 17) das Sedimentationsbecken (10) in eine äußere Kammer (10.1) und eine innere Kammer (10.2) unterteilt, und eine dem inneren Lochblech (11.2, 17.2) zugewandte Pumpe (9), die mit einer zweiten Ableitung (14) zusammenwirkt, oder eine Ablassvorrichtung (4) wirkt, über die ein Filtrat (3) aus dem Sedimentationsbecken (10) abführbar ist, **dadurch gekennzeichnet, dass** zwischen dem äußeren Lochblech (11.1, 17.1) und dem inneren Lochblech (11.2, 17.2) mindestens ein sich in einer Axialrichtung (A_{R}) erstreckendes Rohr (20) eingesetzt ist, dessen Wandung Löcher (21) aufweist, und dass die innere Kammer (10.2) mit einem Fluid befüllbar ist und der Oberflächenfilter (11, 17) zur Reinigung mit einem Fluid, insbesondere mit Wasser, gespült wird, wobei das Fluid dann von dem inneren Lochblech (11.2, 17.2) in Richtung des äußeren Lochblechs (11.1, 17.1) fließt und aus diesem wieder austritt.

2. Vorrichtung nach Anspruch 1, **dadurch gekennzeichnet, dass** der Oberflächenfilter (11) zylindrisch oder polyedrisch ausgebildet und die Lochbleche (11.1, 11.2) konzentrisch zueinander angeordnet sind.

3. Vorrichtung nach Anspruch 1, **dadurch gekennzeichnet, dass** der Oberflächenfilter (17) plattenförmig ausgebildet ist und die Lochbleche (17.1, 17.2) parallel zueinander angeordnet sind.

4. Vorrichtung nach einem der vorstehenden Ansprüche, **dadurch gekennzeichnet, dass** das Filtermaterial (11.3, 17.3) ein Natursubstrat, insbesondere Holzmaterial ist.

5. Vorrichtung nach einem der vorstehenden Ansprüche, **dadurch gekennzeichnet, dass** der Oberflächenfilter (11, 17) mit seinem oberen Rand (16) über die Oberfläche (22) der wässrigen Suspension (Fluidoberfläche) hinausragt.

6. Vorrichtung nach einem der vorstehenden Ansprüche, **dadurch gekennzeichnet, dass** der Oberflächenfilter (10) mit einem Schwimmkörper (15) versehen ist.

7. Vorrichtung nach einem der vorstehenden Ansprüche, **dadurch gekennzeichnet, dass** der Oberflächenfilter (11) an seinen Enden (16) mit Deckeln (1, 6) verschlossen und vollständig in die wässrige Suspension eingetaucht ist.

8. Verfahren zum Trennen von Suspensionen zur Eindickung von Schlamm, insbesondere von Klärschlamm, mittels einer Vorrichtung mit einem Sedimentationsbecken (10), in das über eine Zuleitung (13) die mit Feststoffpartikeln versehene wässrige Suspension zuführbar und aus dem über eine erste Ableitung (7) eingedickter Schlamm (8) abführbar ist, wobei in die Suspension ein Oberflächenfilter (11, 17) eingetaucht ist, der aus mindestens einem äußeren Lochblech (11.1, 17.1), einem hierzu beabstandet angeordneten inneren Lochblech (11.2, 17.2) und einem zwischen den beiden Lochblechen (11.1, 11.2; 17.1, 17.2) eingesetzten Filtermaterial (11.3, 17.3) besteht, wobei der Oberflächenfilter (11, 17) das Sedimentationsbecken (10) in eine äußere Kammer (10.1) und eine innere Kammer (10.2) unterteilt, und dem inneren Lochblech (11.2, 17.2) eine Pumpe (9) zugewandt ist, die mit einer zweiten Ableitung (14) zusammenwirkt, oder eine Ablassvorrichtung (4) wirkt, über die ein Filtrat (3) aus dem Sedimentationsbecken (10) abführbar ist, mit folgenden Schritten:
a) Einfahren des Oberflächenfilters (11, 17) in das Sedimentationsbecken (10),
b) Einfüllen der wässrigen Suspension über die Zuleitung (13) in das Sedimentationsbecken (10),
c) Abscheiden der Feststoffe an der Oberfläche des Oberflächenfilters (11, 17) bzw. des äußeren Lochblechs (11.1, 17.1),
d) Sammeln des aus dem inneren Lochblech (11.2, 17.2) austretenden Filtrats (3) in der inneren Kammer (10.2)
e) Herauspumpen des in der inneren Kammer (10.2) gesammelten Filtrats (3) mittels der Pumpe (9) über die zweite Ableitung (14) und/oder Abführen des Filtrats über eine Ablassvorrichtung (4),
**dadurch gekennzeichnet, dass**
f) über ein im Filtermaterial angeordnetes Rohr (20) und in der Wandung des Rohres befindliche Löcher (21) Fluid in den Oberflächenfilter (11, 17) eingetragen werden kann, und
g) der Oberflächenfilter (11, 17) zur Reinigung mit einem Fluid, insbesondere mit Wasser gespült wird, wobei das Fluid dann von dem inneren Lochblech (11.2, 17.2) in Richtung des äußeren Lochblechs (11.1, 17.1) fließt und aus diesem wieder austritt.

9. Verfahren nach Anspruch 8, **dadurch gekennzeichnet, dass der** Oberflächenfilter (11, 17) belüftet wird.

10. Verfahren nach Anspruch 8 oder 9, **dadurch gekennzeichnet, dass** das Fluid zum Spülen unter einem Überdruck steht.

11. Verfahren nach einem der Ansprüche 8 bis 10, **dadurch gekennzeichnet, dass** der Oberflächenfilter (11, 17) zur Reinigung aus der Suspension oder aus den Sedimentationsbecken (10) herausgehoben wird.

## Claims

1. A device for separating suspensions for thickening sludge, in particular sewage sludge, with a sedimentation tank (10) into which the aqueous suspension provided with solid particles can be fed via a supply line (13) and from which thickened sludge (8) can be discharged via a first discharge line (7), and a surface filter (11, 17) that can be immersed in the suspension, the former being composed of at least one outer perforated plate (11.1, 17.1), an inner perforated plate (11.2, 17.2) arranged spaced apart from said outer plate and a filter material (11.3, 17.3) inserted between the two perforated plates (11.1, 11.2; 17.1, 17.2), wherein the surface filter (11, 17) divides the sedimentation tank (10) into an outer chamber (10.1) and an inner chamber (10.2), and a pump (9) facing the inner perforated plate (11.2, 17.2), which engages with a second outlet (14), or a discharge device (4) acts, via which a filtrate (3) can be discharged from the sedimentation tank (10), **characterised in that** at least one pipe (20) extending in an axial direction (A_{R}) is inserted between the outer perforated plate (11.1, 17.1) and the inner perforated plate (11.2, 17.2), the walls of the former having holes (21), and that the inner chamber (10.2) can be filled with a fluid and the surface filter (11, 17) can be flushed with a fluid, especially water, for cleaning purposes, wherein the fluid then flows from the inner perforated plate (11.2, 17.2) towards the outer perforated plate (11.1, 17.1) and then leaves it again.

2. The device according to claim 1, **characterised in that** the surface filter (11) is designed to be cylindrical or polyhedral and the perforated plates (11.1, 11.2) are arranged concentrically to one another.

3. The device according to claim 1, **characterised in that** the surface filter (17) is designed to be plate-shaped and the perforated plates (17.1, 17.2) are arranged parallel to one another.

4. The device according to one of the preceding claims, **characterised in that** the filter material (11.3, 17.3) is a natural substrate, in particular a wood material.

5. The device according to one of the preceding claims, **characterised in that** the surface filter (11, 17) protrudes with its upper edge (16) above the surface (22) of the aqueous suspension (fluid surface).

6. The device according to one of the preceding claims, **characterised in that** the surface filter (10) is provided with a floating body (15).

7. The device according to one of the preceding claims, **characterised in that** the ends (16) of the surface filter (11) are sealed with covers (1, 6) and completely immersed into the aqueous suspension.

8. A method for separating suspensions for thickening sludge, in particular sewage sludge, by means of a device with a sedimentation tank (10) into which the aqueous suspension provided with solid particles can be fed via a supply line (13) and from which thickened sludge (8) can be discharged via a first discharge line (7), wherein a surface filter (11, 17) is immersed in the suspension, the former being composed of at least one outer perforated plate (11.1, 17.1), an inner perforated plate (11.2, 17.2) arranged spaced apart from said outer plate and a filter material (11.3, 17.3) inserted between the two perforated plates (11.1, 11.2; 17.1, 17.2), wherein the surface filter (11, 17) divides the sedimentation tank (10) into an outer chamber (10.1) and an inner chamber (10.2), and a pump (9) is facing the inner perforated plate (11.2, 17.2), which engages with a second outlet (14), or a discharge device (4) acts, via which a filtrate (3) can be drained from the sedimentation tank (10), comprising the following steps:
a) inserting the surface filter (11, 17) into the sedimentation tank (10),
b) filling the sedimentation tank (10) with the aqueous solution via the supply line (13),
c) separating the solids on the surface of the surface filter (11, 17) of the outer perforated plate (11.1, 17.1),
d) collecting the filtrate (3) leaving the inner perforated plate (11.2, 17.2) in the inner chamber (10.2),
e) pumping out the filtrate (3) collected in the inner chamber (10.2) by means of the pump (9) via the second discharge line (14) and/or draining the filtrate via a discharge device (4),
**characterised in that**
f) fluid can be fed into the surface filter (11, 17) via a pipe (20) arranged in the filter material and holes (21) located in the wall of the pipe, and
g) the surface filter (11, 17) can be flushed with a fluid, especially water, for cleaning purposes, wherein the fluid then flows from the inner perforated plate (11.2, 17.2) towards the outer perforated plate (11.1, 17.1) and then leaves it again.

9. The method according to claim 8, **characterised in that** the surface filter (11, 17) is ventilated.

10. The method according to claim 8 or 9, **characterised in that** the flushing fluid is under an overpressure.

11. The method according to one of the claims 8 to 10, **characterised in that** the surface filter (11, 17) is lifted out of the suspension or the sedimentation tank (10) for cleaning.

## Revendications

1. Dispositif de séparation de suspensions pour l'épaississement de boues, en particulier de boues d'épuration, comprenant un bassin de sédimentation (10) dans lequel la suspension aqueuse munie de particules solides peut être amenée par une conduite d'amenée (13) et duquel des boues épaissies (8) peuvent être évacuées par une première conduite d'évacuation (7), et comprenant un filtre de surface (11, 17) susceptible d'être immergé dans la suspension et constitué d'au moins une tôle perforée extérieure (11.1, 17.1), d'une tôle perforée intérieure (11.2, 17.2) disposée à distance de celle-ci et d'un matériau filtrant (11.3, 17.3) inséré entre les deux tôles perforées (11.1, 11.2 ; 17.1, 17.2), le filtre de surface (11, 17) subdivisant le bassin de sédimentation (10) en une chambre extérieure (10.1) et en une chambre intérieure (10.2), et comprenant une pompe (9) tournée vers la tôle perforée intérieure (11.2, 17.2), qui coopère avec une deuxième conduite d'évacuation (14), ou un dispositif de décharge (4) permettant d'évacuer un filtrat (3) hors du bassin de sédimentation (10),
**caractérisé en ce que**
au moins un tube (20) qui s'étend dans une direction axiale (A_{R}) et dont la paroi présente des trous (21) est inséré entre la tôle perforée extérieure (11.1, 17.1) et la tôle perforée intérieure (11.2, 17.2), et
**en ce que** la chambre intérieure (10.2) est susceptible d'être remplie d'un fluide, et le filtre de surface (11, 17) est rincé avec un fluide, en particulier avec de l'eau, pour être nettoyé, le fluide s'écoulant alors de la tôle perforée intérieure (11.2, 17.2) vers la tôle perforée extérieure (11.1, 17.1) et ressortant de celle-ci.

2. Dispositif selon la revendication 1,
**caractérisé en ce que** le filtre de surface (11) est de forme cylindrique ou polyédrique, et les tôles perforées (11.1, 11.2) sont disposées de manière concentrique l'une par rapport à l'autre.

3. Dispositif selon la revendication 1,
**caractérisé en ce que** le filtre de surface (17) est réalisé en forme de plaque, et les tôles perforées (17.1, 17.2) sont disposées parallèlement l'une à l'autre.

4. Dispositif selon l'une des revendications précédentes,
**caractérisé en ce que** le matériau filtrant (11.3, 17.3) est un substrat naturel, en particulier un matériau à base de bois.

5. Dispositif selon l'une des revendications précédentes,
**caractérisé en ce que** le filtre de surface (11, 17) dépasse par son bord supérieur (16) de la surface (22) de la suspension aqueuse (surface du fluide).

6. Dispositif selon l'une des revendications précédentes,
**caractérisé en ce que** le filtre de surface (10) est pourvu d'un corps flottant (15).

7. Dispositif selon l'une des revendications précédentes,
**caractérisé en ce que** le filtre de surface (11) est fermé à ses extrémités (16) par des couvercles (1, 6) et est complètement immergé dans la suspension aqueuse.

8. Procédé de séparation de suspensions pour l'épaississement de boues, en particulier de boues d'épuration, au moyen d'un dispositif comprenant un bassin de sédimentation (10) dans lequel la suspension aqueuse munie de particules solides peut être amenée par une conduite d'amenée (13) et duquel des boues épaissies (8) peuvent être évacuées par une première conduite d'évacuation (7), un filtre de surface (11, 17) étant immergé dans la suspension, qui est constitué d'au moins une tôle perforée extérieure (11.1, 17.1), d'une tôle perforée intérieure (11.2, 17.2) disposée à distance de celle-ci et d'un matériau filtrant (11.3, 17.3) inséré entre les deux tôles perforées (11.1, 11.2 ; 17.1, 17.2), le filtre de surface (11, 17) subdivisant le bassin de sédimentation (10) en une chambre extérieure (10.1) et en une chambre intérieure (10.2), et une pompe (9) étant tournée vers la tôle perforée intérieure (11.2, 17.2), qui coopère avec une deuxième conduite d'évacuation (14), ou il est prévu un dispositif de décharge (4) permettant d'évacuer un filtrat (3) hors du bassin de sédimentation (10), comprenant les étapes consistant à :
a) insérer le filtre de surface (11, 17) dans le bassin de sédimentation (10),
b) introduire la suspension aqueuse dans le bassin de sédimentation (10) par la conduite d'amenée (13),
c) séparer les matières solides à la surface du filtre de surface (11, 17) ou de la tôle perforée extérieure (11.1, 17.1),
d) collecter dans la chambre intérieure (10.2) le filtrat (3) qui sort de la tôle perforée intérieure (11.2, 17.2),
e) pomper le filtrat (3), collecté dans la chambre intérieure (10.2), au moyen de la pompe (9) via la deuxième conduite d'évacuation (14), et/ou évacuer le filtrat par le dispositif de décharge (4),
**caractérisé en ce que**
f) le fluide peut être introduit dans le filtre de surface (11, 17) par l'intermédiaire d'un tube (20), disposé dans le matériau filtrant, et de trous (21) ménagés dans la paroi du tube, et
g) le filtre de surface (11, 17) est rincé avec un fluide, en particulier avec de l'eau, pour être nettoyé, le fluide s'écoulant alors de la tôle perforée intérieure (11.2, 17.2) vers la tôle perforée extérieure (11.1, 17.1) et ressortant de celle-ci.

9. Procédé selon la revendication 8,
**caractérisé en ce que** le filtre de surface (11, 17) est aéré.

10. Procédé selon la revendication 8 ou 9,
**caractérisé en ce que** le fluide de rinçage est sous une pression positive.

11. Procédé selon l'une des revendications 8 à 10,
**caractérisé en ce que** le filtre de surface (11, 17) est soulevé hors de la suspension ou du bassin de sédimentation (10) pour être nettoyé.
